(19) Europäisches Patentamt
European Patent Office
Office européen des brevets

(11) **EP 2 941 960 B1**

(12) **EUROPEAN PATENT SPECIFICATION**

(45) Date of publication and mention
of the grant of the patent:
**13.12.2017 Bulletin 2017/50**

(51) Int Cl.:
***A23G 1/00*** *(2006.01)*

(21) Application number: **14075030.8**

(22) Date of filing: **08.05.2014**

(54) **Method for tempering chocolate**

Verfahren zum Temperieren von Schokolade

Procédé pour le tempérage de chocolat

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**11.11.2015 Bulletin 2015/46**

(73) Proprietor: **Aasted ApS**
**3520 Farum (DK)**

(72) Inventor: **Holmud, Dennis**
**2860 Søborg (DK)**

(74) Representative: **Heiden, Finn**
**Heiden ApS**
**Sønderengen 12**
**2870 Dyssegård (DK)**

(56) References cited:
**EP-A1- 0 654 222     EP-A1- 0 685 168
EP-A2- 2 705 760     DE-A1- 10 329 177
US-A- 4 859 483      US-A1- 2012 148 711**

**Description**

The present invention relates to a method for continuous tempering of chocolate mass. By the method the chocolate mass is cooled, crystallised and simultaneously by-passed and mixed into a final stream of mass.

The method is applied on tempering apparatuses which are typically of the dominating type on the market by which the cooling stage (A), the crystallisation stage (B) and the mixing stage (C) are arranged as a tempering column, and each having their own cooling circuit with water temperature regulating means wired to a computer control unit for control of each particular stage. A major pump is arranged at the inlet to the column for the chocolate mass. A conduit with a secondary pump for chocolate mass is arranged by-passing the stage (B) for creating crystals.

Generally, the chocolate mass encompass all types of suspensions of non-fat particles such as sugar, milk powders and cocoa solids mixed up with a liquid fat constituent, so that the suspensions are capable of crystallizing into stable crystal types when the mass solidifies, such as the $\beta$V-crystals developing in genuine cocoa butter. Only then, eatable chocolate articles with good taste, crisp break and shiny appearance are created. The solidified chocolate articles will also achieve the longest possible shelf life and the best resistance against bloom, as instable crystals are diminished. If there is a content of in-stable crystals left in the mass, they will give rise to shorter shelf-life as the articles will bloom more quickly as when in-stable crystals are not present.

With the prior art methods the chocolate temperatures at the end of the cooling stage, at the end of the crystallisation stage and at the end of the mixing stage are set in accordance with experience for a particular chocolate type. The cooling at the particular stage then automatically adopts to the requirement so that the chocolate mass being tempered reaches the required temperatures after each stage. Typically, it takes 20-30 minutes to reach such values. Then, a sample of the tempered mass is tested with a tempermeter and the Tempering degree is obtained. If it is too low for the required purpose, for example being 4 instead of 5 as desired, the tempering is altered, so that more crystals are made and the tempering degree is increased. A new sample is then taken out and so on until the result is satisfactory. The process is cumbersome and requires the attendance of a person particularly skilled and trained in chocolate physics, and behaviour when controlling a tempering machine. It leads to a major number of articles produced not having the desired quality and shelf-life during the long periods of running in the apparatus.

EP2510806A2 discloses a method and a tempering apparatus by which the tempering degree is obtained with a built-in sample provider. The method is a teach-in procedure required before the actual production may begin. It takes between 1 and 3 hours, typically 2 hours. The temperature and flow of the chocolate delivered to the cooling stage of the tempering apparatus must be constant. During the teach-in period the tempering degree is obtained a number of times. Each time is the result compared to the desired tempering degree. The cooling of the stages are then altered according to the skilled persons long-time knowledge of chocolate-making, tempering procedures and making changes in the set-points of the tempering apparatus in accordance herewith. The changes encompass adjustment of the output temperature, the crystallisation temperature and of the cooling temperature that the chocolate must attain at the end of the particular stages. Also the cooling water temperature of for example the crystallisation stage may be altered. What is decisive is that the skilled person take advantage of his skills to evaluate the influence of the particular changes in settings for the overall result of the tempering procedure. The built-in sample provider is connected with a controlling computer that learns the stepwise changes so it may perform the teached-in settings with time when actual production is started.

EP2705760A2 discloses an apparatus for continuous tempering of chocolate mass having a cooling stage (A), a crystallisation stage (B) and a mixing stage (C) arranged as a column. At the inlet to the column is a main pump for the chocolate mass and a secondary pump is arranged in a conduit by-passing the stage (B) for creating crystals. A specific example discloses that a milk chocolate is cooled from 45°C to 32°C in the cooling stage (A), the mass is then split into 33% being crystallised with a temperature of 28°C and 67% being by-passed with a constant temperature of 32°C. In the mixing stage (C) the two crystallised and the by-passed streams are mixed together ending with a temperature of 29,5°C. The disclosure is focused on the by-passing technique when tempering chocolate and not on how to achieve certain levels of tempering index for different types of chocolate mass.

EP0654222A1 discloses a method and apparatus for continuous tempering of chocolate mass. The apparatus has a cooling zone A, a crystal-formation area K in the cooling stage and a re-heating zone G each having a temperature sensor T1, T2 and T3 respectively for measuring the chocolate temperature at the particular zone or area. The sensors T1, T2, T3 are connected to electronic units R1 and R2B respectively, which controls cooling circuits K1, K2 for the cooling zone A and the re-heating zone G respectively. By the method, the flow of the separately circulating cooling medium which overflows the final crystal formation area K is controlled in response to values of the temperature of the chocolate mass being measured by the temperature sensor T2. The cooling amount is thereby controlled to the instantaneous requirement so that it is ensured that the content of crystals created in the mass is kept at a predetermined constant portion of the total amount of mass.

The problem to be solved by the present invention is to provide a method which is able to attain and provide the correct production settings of a tempering process in a short time on basis of no knowledge of the complicated tempering process. Also the built-in expensive sample provider must be avoided.

According to the present invention the method for continuous tempering of chocolate mass comprises the steps of:

pumping chocolate mass with an input temperature of 40-50°C to a tempering column,
determining an output temperature (Toutput) for the tempered mass,
calculating a by-pass temperature for the mass as

$$\text{Tby-pass} = \text{Toutput} + 2°C,$$

cooling down all the mass to Tby-pass,
crystallising 1/3 of the mass to a crystallised mass temperature (Tcrystal) as calculated from

$$\text{Toutput} = ((2/3 \times \text{Tby-pass}) + (1/3 \times \text{Tcrystal}))$$

by-passing 2/3 of the mass keeping it free from crystals at a constant temperature (Tby-pass),
mixing together all the mass and tempering it to the output temperature (Toutput), and comprising the further steps of increasing tempering index incrementally by providing more cooling during the crystallisation and increasing the amount of mass by-passed to more than 2/3 of the total mass, when the requirement is to obtain a higher tempering index of the tempered mass, or vice versa, when the requirement is to decrease the tempering index incrementally.

Hereby is obtained, that only one value is needed for the method to be performed and to be entered into the control panel of the tempering machine. That is the output temperature of the ready tempered chocolate mass, which is given to the operator when production is to begin. The method calculates the by-pass and the crystallisation temperatures to be reached as target temperatures, and the cooling amounts required to achieve these values are performed in the different stages. The ready tempered mass has the required output temperature and surprisingly also a desired "neutral" tempering index of between 3 and 6 depending of the different mass type in question. A tempering index of 5 of the tempered chocolate mass is desirable for many purposes such as traditional shell moulding of articles, for example.

When the requirement is a simple and fast adjustment of the tempering index to the required purpose, such as another moulding process for the tempered chocolate mass, the inventive method comprises the further steps of increasing the tempering index incrementally by providing more cooling during the crystallisation and increasing the amount of mass by-passed to more than 2/3 of the total mass, when the requirement is to obtain a higher tempering index of the tempered mass, or vice versa, when the requirement is to decrease the tempering index incrementally. When the tempering index is increased to for example 6, the tempered chocolate mass is suitable for processes such as cold-pressing as being "thicker" and richer in crystal amount. When the tempering index is decreased to 4, for example, the tempered chocolate is perfect for use with an enrober as being "thinner" and pourer in crystal amount.

With an especially advantageous and simple embodiment the method further comprises the initial step of determining the output temperature (Toutput) for the tempered mass on basis of correlations with the fat percentage of the particular chocolate mass. The correlations between output temperature and fat percent is regarded as lineary. When knowing the accurate fat percent for the particular chocolate mass, the output temperature is simple to acquire from the lineary correlation.

The inventive method is applied at a tempering apparatus having sensors for measurement of chocolate temperatures arranged

at the by-pass conduit,
at the end of the crystallisation stage and
at the outlet from the mixing stage,
which sensors are wired to the computer control unit having a touch screen display adapted for input saving of the desired output temperature of the chocolate,
in which control unit is saved the controlling equations

$$\text{Tby-pass} = \text{Toutput} + 2°C,$$

$$\text{Toutput} = ((2/3 \times \text{Tby-pass}) + 1/3 \times \text{Tcrystal}))$$

which sets the calculated chocolate temperatures at the particular sensors and dictates the control of the particular cooling circuits accordingly when the value of the output temperature Toutput is feed into the control unit via the touch screen.

Hereby is obtained with the inventive method that the tempering apparatus is operable by personnel not having any skills in chocolate tempering. The only requirement is that the operator feeds in the desired output temperature of the tempered chocolate mass via the touch screen. The apparatus calculates the temperatures at the end of the crystallisation stage and at by-pass stage and regulates the necessary cooling amounts of the different stages so that these chocolate temperatures are reached after 5-10 minutes. Then the production may begin at once the settings are reached. The tempering index of the tempered chocolate mass is then between 3 and 6 depending of the particular mass type.

The tempering index can be adjusted for the particular process to follow for the tempered mass when the control unit is adapted for input of offsets from a zero for directly affecting the water temperature regulating means of the cooling circuit of the crystallisation stage for a lower water temperature and simultaneously affecting the pump of the by-pass conduit for a higher flow of chocolate, for increasing the index or vice versa, for lowering the index. This can also be done by the unskilled operator as he only has to be informed of the necessary adjustment to be performed. For example adjusting to an index of 6 when the tempered mass shall be used for coldpressing or adjusting to a lower index such as 4 when the mass is to be used for enrobing.

A simple and fast responsive solution is when a water pump of the cooling circuit of the crystallisation stage is frequency controlled and is wired to the control unit. When the chocolate pump of the by-pass is frequency controlled as well the period for the tempered mass of reaching the desired index is the shortest possible. Instead of the the pump could also be used a valve with a linear step-actuator.

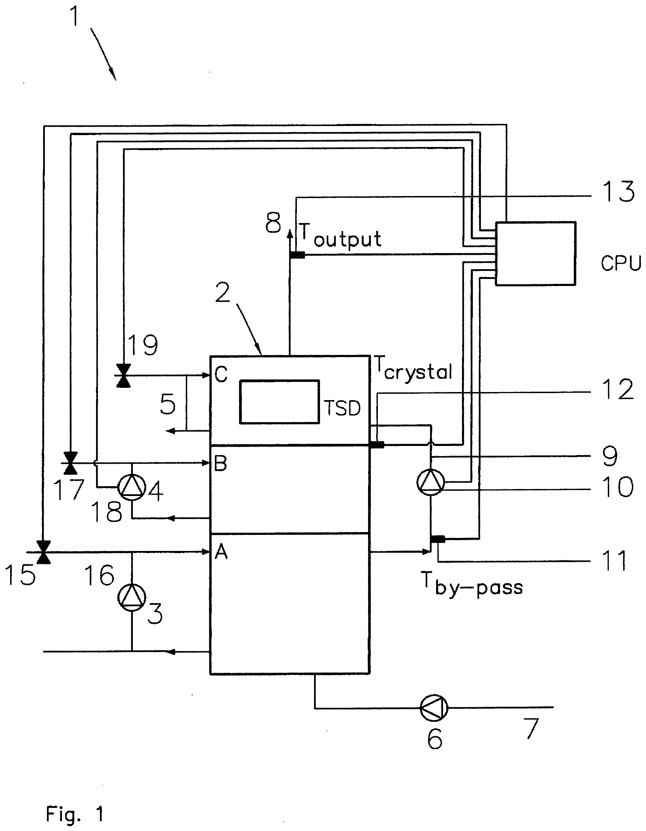

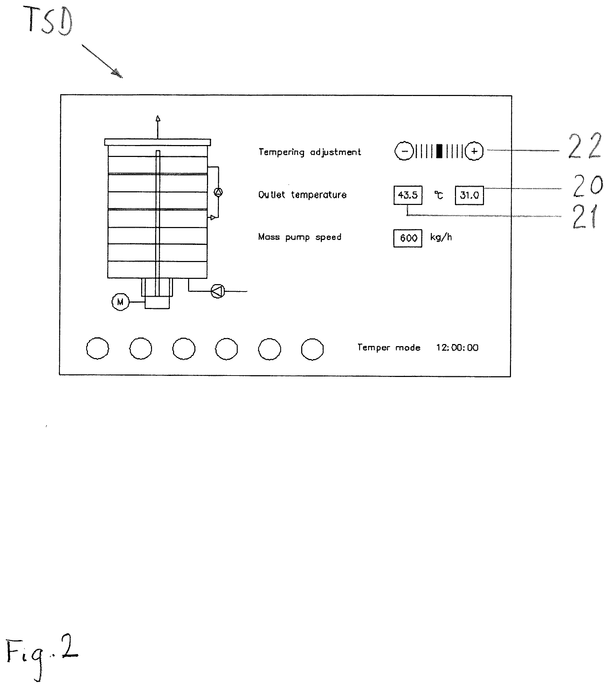

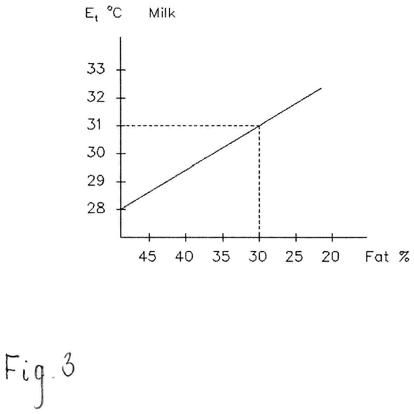

The invention is explained further below under reference to preferred embodiments as well as the drawing, in which fig. 1 schematically discloses the tempering apparatus to which the inventive method is applied, the apparatus not forming part of the invention, fig. 2 discloses the touch screen layout of the apparatus of figure 1, and fig. 3 discloses a lineary correlation between the total fat percentage of a milk chocolate mass and the desired temperature Et of the tempered milk chocolate.

The tempering apparatus 1 disclosed in figure 1 comprises a column 2 for continuous tempering of chocolate mass. Typically, it comprises a succession of mass chambers and intermediary water chambers, and a central drive shaft in engagement with mixing elements arranged in each mass chamber as being widely used in the prior art. The column 2 comprises a cooling stage (A), a crystallisation stage (B) and a mixing stage (C) each having their own cooling circuit (3, 4 and 5 respectively).

A major chocolate pump 6 is arranged at the inlet conduit 7 for the chocolate mass to the column 2. The chocolate leaves the column 2 via an outlet conduit 8. A conduit 9 with a secondary pump 10 for chocolate mass is arranged by-passing the stage B for creating crystals.

A sensor 11 for measurement of the chocolate temperature Tby-pass is arranged at the by-pass conduit 9. A second sensor 12 for measurement of the chocolate temperature Tcrystal is arranged at the end of the chocolate crystallisation stage B. A third sensor for measurement of the temperature Toutput of the ready tempered mass is arranged at the outlet conduit 8. The sensors 11, 12, 13 are connected, typically by wiring, to a computer control unit CPU. The computer control unit CPU is connected with a touch screen display TSD, it could be via WiFi or via wiring.

Water temperature regulating means are wired to the computer control unit CPU for control of each particular chocolate stage A, B and C.

A valve 15 for inlet of cooling water to the cooling circuit 3 for stage A is wired to the computer control unit CPU. A circulation pump 16 circulates the water in the stage A. A valve 17 for inlet of cooling water to cooling circuit 4 of the crystallisation stage B is also wired to the computer control unit CPU. A frequency controlled circulation pump 18 or a valve with a linear step-actuator regulating the circulated flow in the cooling circuit 4 is also wired to the computer control unit CPU. A valve 19 for inlet of cooling or heating water to the circuit 5 of the mixing stage C is also wired to the computer control unit CPU. The wiring is as such not part of the invention as the important issue is that these regulation means are connected with the computer control unit. This is today also done widely by means of WiFi, Bluetooth and other communication connections. Important is only, that the regulation valves and pumps respond to control dictated by the CPU.

The computer control unit CPU is controlled by a touch screen display TSD, which is disclosed separately at figure 2. The control unit CPU and the touch screen display TSD is today often built into one unit but is here disclosed as two units. The controlling equations are saved in the control unit CPU:

$$Tby\text{-}pass = Toutput + 2°C,$$

$$Toutput = ((2/3 \times Tby\text{-}pass) + 1/3 \times Tcrystal))$$

The touch screen display TSD is adapted for input saving 20 of the desired target output temperature Toutput of the chocolate to be achieved during production. The operator makes the input of the target output chocolate temperature Toutput, for example 31.0°C for a milk chocolate as disclosed at 20 in figure 2.

The computer CPU thereafter uses the equations to calculate the two other target chocolate temperatures Tcrystal and Tby-pass to be achieved at the end of the crystallisation stage B and at the end of the cooling stage A, respectively, for the particular chocolate type to be tempered. In the example of Toutput = 31.0°C as input target temperature, the computer calculates the target temperature of Tby-pass = 33°C and the target temperature of Tcrystal = 27.1°C.

The computer control unit CPU then sets these target temperatures Tby-pass, Tcrystal and Toutput at the particular sensors 11, 12, 13, respectively, and dictates the control of the particular cooling circuits 3, 4, 5 accordingly so that the desired target output temperature Toutput is achieved.

With the example of figure 2 the operator has keyed in the target output temperature of 31.0°C disclosed at 20. Prematurely the desired production capacity of chocolate was keyed in, here set to 600 kg tempered chocolate pro hour.

In the example of figure 2, the temperature of the chocolate in the inlet 7 to the tempering apparatus 1 is 45°C.

Within one minute after having keyed in the target output temperature, the realised temperature of the chocolate at the outlet 8 is 43.5°C read out at 21 of the touch screen display TSD of figure 2. After 8 minutes the target output temperature of 31.0°C is reached in the tempered chocolate and read out at 21. The chocolate is ready tempered and production begins.

By the inventive method the achieved tempering index of the tempered mass is "neutral", measured from a sample as the value 5. The content of crystals in the ready tempered mass then satisfies many purposes such as traditional shell moulding. However, when a higher or lower tempering index is required in accordance with the use of the tempered mass, the operator person simple adjusts the tempering index incrementally at display 22 at the touch screen TSD. If the index is to be rised from 5 to 6 the + buttom is then pressed four times and left. The computer controlled unit CPU then directly regulates the water temperature regulating means of the cooling circuit 4 of the crystallisation stage B for a lower water temperature, typically it is lowered 0.1-0.5°C and simultaneously the pump 10 of the by-pass conduit 9 is controlled for a higher flow of chocolate, typically 5-10% more of the total mass flow at the input 7 is then passing through the by-pass conduit 9. The regulation for the lower water temperature is controlled by regulating the valve 17 to be more open letting in more cold water per time unit or by regulating the frequency controlled water pump or valve 18 to a higher flow, or both.

When the requirement is a lower tempering index, such as 4 for use with an enrober, the operator presses the - button four times and four increments to the left is displayed. The CPU regulates so that the water of the cooling circuit becomes warmer, typically 0.1-0.5°C rise and concomitantly the flow of the by-pass pump 10 is lowered so that typically 5-10% less mass is by-passed. These regulations are performed by the apparatus in short time, i.e. under one minute.

In the computer unit CPU may also be saved a lineary correlation between the output temperature (Toutput) for the tempered mass and the fat percentage of the particular chocolate mass. At figure 3 is disclosed such lineary correlation between the desired temperature Et for a common milk chocolate being tempered and the available fat percentages of that chocolate.

Then, the operator only has to look up the fat percentage at the product specifications or label of chocolate mass, key in the fat percentage. The computer finds the relevant output temperature for the mass in question and starts up the tempering process according to the equations described above.

A:      Cooling stage
B:      Crystallisation stage
C:      Mixing stage
CPU:    computer control unit
TSD:    touch screen display

Tby-pass:   chocolate temperature at by-pass conduit 9
Tcrystal:   chocolate temperature at end of crystallisation stage B
Toutput:    chocolate temperature at outlet conduit 8

1:      apparatus for continuous tempering
2:      tempering column
3:      cooling circuit for stage A
4:      cooling circuit for stage B

5: cooling circuit for stage C
6: chocolate pump at inlet
7: inlet conduit
8: outlet conduit
9: by-pass conduit
10: secondary pump
11: sensor for by-pass temperature
12: sensor for temperature of crystallised mass
13: sensor for temperature of mixed mass
14: touch screen display
15: valve for cooling water
16: circulation pump
17: valve for water
18: frequency controlled circulation pump or valve with step-actuator
19: valve for cooling water
20: target output chocolate temperature
21: realised output chocolate temperature
22: adjustment display for tempering index

**Claims**

**1.** Method for continuous tempering of chocolate mass comprising the steps of:

pumping chocolate mass with an input temperature of 40-50°C to a tempering column (2),
determining a target output temperature (Toutput) for the tempered mass and which is given to the operator
when production is to begin and to be entered into the control panel of the tempering machine, then
calculating a by-pass temperature (Tby-pass) for the mass as

$$T_{by-pass} = T_{output} + 2°C,$$

cooling down all the mass to Tby-pass,
crystallising 1/3 of the mass to a crystallised mass temperature (Tcrystal) as calculated from

$$T_{output} = ((2/3 \times T_{by-pass}) + (1/3 \times T_{crystal}))$$

by-passing 2/3 of the mass keeping it free from crystals at a constant temperature (Tby-pass),
mixing together all the mass and tempering it to the output temperature (Toutput),
and comprising the further steps of increasing the tempering index incrementally by
providing more cooling during the crystallisation and increasing the amount of mass by-passed to more than
2/3 of the total mass, when the requirement is to obtain a higher tempering index of the tempered mass, or vice
versa, when the requirement is to decrease the tempering index incrementally.

**2.** Method according to claim 1 further comprising, that the tempering index is increased or decreased incrementally
stepwise by increments of % of one unit of the tempering index.

**3.** Method according to claim 1 further comprising the initial step of determining the output temperature (Toutput) for
the tempered mass on basis of correlations with the fat percentage of the particular chocolate mass.

**Patentansprüche**

**1.** Verfahren zum kontinuierlichen Temperieren von Schokoladenmasse, welches die folgenden Schritte umfasst:

Pumpen von Schokoladenmasse mit einer Einlasstemperatur von 40 bis 50 °C in eine Temperiersäule (2),

Festlegen einer angestrebten Auslasstemperatur (Toutput) für die temperierte Masse, wobei diese dem Bediener mitgeteilt wird, wenn mit der Produktion begonnen werden soll, und wobei sie in das Bedienfeld der Temperiermaschine eingegeben werden muss, woraufhin

für die Masse folgendermaßen eine Umleitungstemperatur (Tby-pass) berechnet wird

$$\text{Tby-pass} = \text{Toutput} + 2 \text{ °C,}$$

Abkühlen der gesamten Masse auf Tby-pass, Kristallisieren von 1/3 der Masse, wobei eine Temperatur der kristallisierten Masse (Tcrystal) erreicht wird, wie sie auf folgender Grundlage berechnet wird

$$\text{Toutput} = ((2/3 \text{ x Tby-pass}) + (1/3 \text{ x Tcrystal}))$$

Umleiten von 2/3 der Masse, wobei diese bei einer konstanten Temperatur (Tby-pass) frei von Kristallen bleibt, Zusammenmischen der gesamten Masse und Temperieren derselben auf die Auslasstemperatur (Toutput), und welches weiterhin die Schrittes umfasst, die darin bestehen, den Temperiergrad inkrementell zu erhöhen, indem

eine stärkere Kühlung während der Kristallisation und bereitgestellt wird und die massenbezogene Menge an umgeleiteter Masse auf mehr als 2/3 der Gesamtmasse erhöht wird, wenn die Anforderung darin besteht, der temperierten Masse einen höheren Temperiergrad zu verleihen, oder das Gegenteil getan wird, wenn die Anforderung darin besteht, den Temperiergrad inkrementell zu senken.

2. Verfahren nach Anspruch 1, im Rahmen dessen weiterhin der Temperiergrad inkrementell schrittweise in Inkrementen von ¼ einer Einheit des Temperiergrads erhöht oder gesenkt wird.

3. Verfahren nach Anspruch 1, welches weiterhin den anfänglichen Schritt des Festlegens der Auslasstemperatur (Toutput) für die temperierte Masse derart umfasst, dass dies auf Korrelationen mit den Fettprozentanteil der jeweils vorliegenden Schokoladenmasse beruht.


**Revendications**

1. Méthode de tempérage continu d'une masse de chocolat, comprenant les étapes consistant à :

pomper une masse de chocolat ayant une température d'entrée de 40-50°C vers une colonne de tempérage (2), déterminer une température de sortie cible ($T_{sortie}$) pour la masse tempérée et qui est donnée à l'opérateur lorsque la production doit commencer et doit être entrée dans le panneau de commande de la tempéreuse, puis calculer une température de dérivation ($T_{dérivation}$) pour la masse telle que

$$T_{dérivation} = T_{sortie} + 2 \text{°C,}$$

refroidir l'ensemble de la masse jusqu'à $T_{dérivation}$, cristalliser 1/3 de la masse jusqu'à une température de masse cristallisée ($T_{cristal}$) telle que calculée d'après

$$T_{sortie} = ((2/3 \times T_{dérivation}) + (1/3 \times T_{cristal}))$$

faire dériver 2/3 de la masse en la maintenant exempte de cristaux à une température constante ($T_{dérivation}$), mélanger l'ensemble de la masse et la tempérer jusqu'à la température de sortie ($T_{sortie}$), et comprenant les étapes supplémentaires consistant à augmenter l'indice de tempérage de manière incrémentale en fournissant davantage de refroidissement lors de la cristallisation et en augmentant la quantité de masse dérivée jusqu'à plus de 2/3 de la masse totale, où la spécification consiste à obtenir un indice accru de tempérage de la masse tempérée, ou vice-versa, lorsque la spécification consiste à réduire l'indice de tempérage de manière incrémentale.

**2.** Méthode selon la revendication 1, comprenant en outre que l'indice de tempérage est accru ou réduit de manière incrémentale et par étapes par des incréments de ¼ d'une unité de l'indice de tempérage.

**3.** Méthode selon la revendication 1, comprenant en outre l'étape initiale consistant à déterminer la température de sortie ($T_{sortie}$) pour la masse tempérée sur la base de corrélations avec le pourcentage de matière grasse de la masse de chocolat particulière.

Fig. 1

TSD

Tempering adjustment ⊖||||█||||⊕ — 22

Outlet temperature [43.5] °C [31.0] — 20 / 21

Mass pump speed [600] kg/h

Temper mode   12:00:00

Fig. 2

Fig. 3

**REFERENCES CITED IN THE DESCRIPTION**

**Patent documents cited in the description**

- EP 2510806 A2
- EP 2705760 A2
- EP 0654222 A1